# EUROPEAN PATENT APPLICATION

(11) **EP 4 622 193 A1**
(43) Date of publication of application: **24.09.2025**
(21) Application number: 22965501.4
(22) Date of filing: 16.11.2022
(51) Int. Cl.: H04L 27/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: YANG, Haorui, Dongguan, Guangdong 523860 (CN); CHEN, Jingran, Dongguan, Guangdong 523860 (CN)
(74) Representative: Mewburn Ellis LLP
(86) International application number: PCT/CN2022/132369
(87) International publication number: WO 2024/103317

(57) **Abstract**

A method for wireless communication, a terminal device, and a network device are disclosed. The method includes the following. A terminal device reports mobility information of the terminal device to a target network device according to target information or first indication information, where the target information is configuration information for the terminal device to report the mobility information, and the first indication information indicates that the terminal device is to report the mobility information.

## Description

### TECHNICAL FIELD

This disclosure relates to the field of communication, in particular to a method for wireless communication, a terminal device, and a network device.

### BACKGROUND

In a communication system, when a terminal device moves out of a registration area, the terminal device performs mobility update to a network device.

In an internet of things (IoT) scenario, the movement range of an IoT device is relatively small. When the IoT device is introduced into the communication system, how to realize mobility management of the IoT device is an urgent problem to be solved.

### SUMMARY

The present disclosure provides a method for wireless communication, a terminal device, and a network device, which can realize mobility management of an internet of things (IoT) device.

In a first aspect, a method for wireless communication is provided. The method includes the following. Mobility information of a terminal device is reported to a target network device according to target information or first indication information, where the target information is configuration information for the terminal device to report the mobility information, and the first indication information indicates that the terminal device is to report the mobility information.

In a second aspect, a method for wireless communication is provided. The method includes the following. A first network device obtains target information, where the target information is configuration information for a terminal device to report mobility information. The first network device sends the target information to the terminal device or an access network (AN) device.

In a third aspect, a method for wireless communication is provided. The method includes the following. A second network device sends target information to a first network device, where the target information is configuration information for a terminal device to report mobility information.

In a fourth aspect, a method for wireless communication is provided. The method includes the following. An AN device receives target information sent by a first network device, where the target information is configuration information for a terminal device to report mobility information. The AN device sends first indication information to the terminal device according to the target information, where the first indication information indicates that the terminal device is to report the mobility information.

In a fifth aspect, a terminal device is provided. The terminal device is configured to perform the method in the first aspect or in various implementations of the first aspect.

Specifically, the terminal device includes functional modules configured to perform the method in the first aspect or in various implementations of the first aspect.

In a sixth aspect, a network device is provided. The network device is configured to perform the method in any one of the second aspect to the fourth aspect or in various implementations of the second aspect to the fourth aspect. Specifically, the network device includes functional modules configured to perform the method in any one of the second aspect to the fourth aspect or in various implementations of the second aspect to the fourth aspect.

In a seventh aspect, a terminal device is provided. The terminal device includes a processor and a memory. The memory is configured to store a computer program. The processor is configured to invoke and execute the computer program stored in the memory, to perform the method in the first aspect or in various implementations of the first aspect.

In an eighth aspect, a network device is provided. The network device includes a processor and a memory. The memory is configured to store a computer program. The processor is configured to invoke and execute the computer program stored in the memory, to perform the method in any one of the second aspect to the fourth aspect or in various implementations of the second aspect to the fourth aspect.

In a ninth aspect, a chip is provided. The chip is configured to perform the method in any one of the first aspect to the fourth aspect or in various implementations of the first aspect to the fourth aspect.

Specifically, the chip includes a processor. The processor is configured to invoke and execute a computer program stored in a memory, to cause a device equipped with the apparatus to perform the method in any one of the first aspect to the fourth aspect or in various implementations of the first aspect to the fourth aspect.

In a tenth aspect, a computer-readable storage medium is provided. The computer-readable storage medium is configured to store a computer program that is operable with a computer to perform the method in any one of the first aspect to the fourth aspect or in various implementations of the first aspect to the fourth aspect.

In an eleventh aspect, a computer program product is provided. The computer program product includes computer program instructions that are operable with a computer to perform the method in any one of the first aspect to the fourth aspect or in various implementations of the first aspect to the fourth aspect.

In a twelfth aspect, a computer program is provided. The computer program, when executed by a computer, is operable with the computer to perform the method in any one of the first aspect to the fourth aspect or in various implementations of the first aspect to the fourth aspect.

Through the above technical solutions, the terminal device can report the mobility information based on the configuration information for reporting the mobility information, or report the mobility information when being triggered, so that the network device can obtain the mobility information of the terminal device in time, thereby realizing the mobility management of the terminal device.

### BRIEF DESCRIPTION OF THE DRAWINGS

FIG. 1 is a schematic diagram of an architecture of a communication system provided in implementations of the present disclosure.
FIG. 2 is a schematic diagram illustrating composition of a zero-power-consumption communication system.
FIG. 3 is a schematic diagram of a method for wireless communication according to implementations of the present disclosure.
FIG. 4 is a schematic diagram illustrating interaction of a method for wireless communication according to implementations of the present disclosure.
FIG. 5 is another schematic diagram illustrating interaction of a method for wireless communication according to implementations of the present disclosure.
FIG. 6 is a schematic block diagram of a terminal device according to implementations of the present disclosure.
FIG. 7 is a schematic block diagram of a network device according to implementations of the present disclosure.
FIG. 8 is a schematic block diagram of a network device according to implementations of the present disclosure.
FIG. 9 is a schematic block diagram of an access network (AN) device according to implementations of the present disclosure.
FIG. 10 is a schematic block diagram of a communication device according to implementations of the present disclosure.
FIG. 11 is a schematic block diagram of a chip according to implementations of the present disclosure.
FIG. 12 is a schematic block diagram of a communication system according to implementations of the present disclosure.

### DETAILED DESCRIPTION

The following will describe technical solutions of implementations of the present disclosure with reference to the accompanying drawings of implementations of the present disclosure. Apparently, implementations described herein are merely some implementations, rather than all implementations, of the present disclosure. Based on implementations of the present disclosure, all other implementations obtained by those of ordinary skill in the art without creative effort shall fall within the protection scope of the present disclosure.

Implementations of the present disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area networks (WLAN), a wireless fidelity (WiFi), a 5th-generation (5G) communication system, other communication systems, etc.

Generally speaking, a conventional communication system generally supports a limited number (quantity) of connections and therefore is easy to implement. However, with the development of communication technology, a mobile communication system will not only support conventional communication but also support, for example, device-to-device (D2D) communication, machine-to-machine (M2M) communication, machine-type communication (MTC), vehicle-to-vehicle (V2V) communication, or vehicle-to-everything (V2X) communication, etc. Implementations of the present disclosure are also applicable to these communication systems.

Optionally, the communication system in implementations of the present disclosure may be applied to a carrier aggregation (CA) scenario, or may be applied to a dual connectivity (DC) scenario, or may be applied to a standalone (SA) scenario.

Optionally, the communication system in implementations of the present disclosure is applicable to an unlicensed spectrum, and the unlicensed spectrum may be regarded as a shared spectrum. Alternatively, the communication system in implementations of the present disclosure is applicable to a licensed spectrum, and the licensed spectrum may be regarded as a non-shared spectrum.

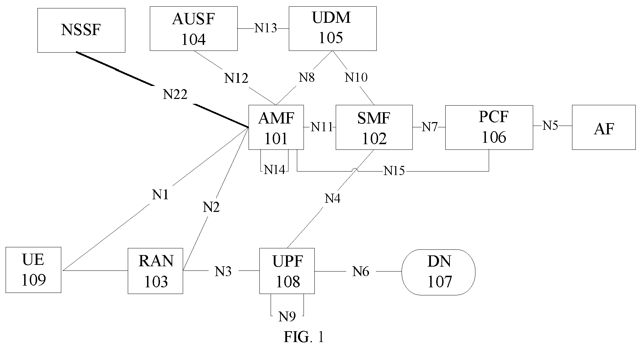

FIG. 1 is a schematic diagram of an architecture of a communication system provided in implementations of the present disclosure. As illustrated in FIG. 1, the communication system mainly includes an access and mobility management function (AMF) entity 101, a session management function (SMF) entity 102, a radio access network (RAN) device 103, an authentication server function (AUSF) entity 104, a unified data management (UDM) entity 105, a policy control function (PCF) entity 106, a data network (DN) 107, a user plane function (UPF) entity 108, a user equipment (UE) 109.

The UE 109 is connected to the AMF 101 through an interface N1, and the UE 109 is connected to the RAN 103 by using a radio resource control (RRC) protocol. The RAN 103 is connected to the AMF 101 through an interface N2, and the RAN 103 is connected to the UPF 108 through an interface N3. Multiple UPFs 108 are connected to each other through an N9 interface, and the UPF 108 is connected to the DN 107 through an N6 interface and to the SMF 102 through an N4 interface at the same time. The SMF 102 is connected to the PCF 106 through an interface N7, to the UDM 105 through an interface N10, and to the AMF 101 through an interface N11. Multiple AMFs 101 are connected to each other through an N14 interface, and the AMF 101 is connected to the UDM 105 through an N8 interface, to the AUSF 104 through an N12 interface, and to the PCF 106 through an N15 interface. The AUSF 104 is connected to the UDM 105 through an N13 interface. The AMF 101 obtains user subscription data from the UDM 105 through the N8 interface and policy data from the PCF 106 through the N15 interface. The SMF 102 obtains user subscription data from the UDM 105 through an N10 interface and policy data from the PCF 106 through an N7 interface. The SMF 102 controls the UPF 108 through the N4 interface.

The RAN 103 (or referred to as "access network (AN) device") is an access device for the UE 109 to access a network architecture wirelessly. The RAN 103 is mainly responsible for functions on an air interface side, such as radio resource management, quality of service (QoS) management, data compression and encryption, etc.

In some implementations of the present disclosure, an AN device may be a device configured to communicate with a mobile device, and the AN device may be an access point (AP) in a WLAN, a base transceiver station (BTS) in GSM or CDMA, or may be a Node B (NB) in WCDMA, or may be an evolutional Node B (eNB or eNodeB) in LTE, or a relay station or AP, or an in-vehicle device, a wearable device, an AN device (gNB) in an NR network, an AN device in a future evolved PLMN, an AN device in an NTN, etc.

By way of explanation rather than limitation, in implementations of the present disclosure, the AN device may be mobile. For example, the AN device may be a mobile device. Optionally, the AN device may be a satellite or a balloon base station (BS). For example, the satellite may be a low earth orbit (LEO) satellite, a medium earth orbit (MEO) satellite, a geostationary earth orbit (GEO) satellite, a high elliptical orbit (HEO) satellite, etc. Optionally, the AN device may also be a BS deployed on land or water.

In implementations of the present disclosure, the AN device serves a cell, and the terminal device communicates with the AN device on a transmission resource (for example, a frequency-domain resource or a spectrum resource) for the cell. The cell may be a cell corresponding to the AN device (for example, a BS). The cell may belong to a macro BS, or may belong to a BS corresponding to a small cell. The small cell may include: a metro cell, a micro cell, a pico cell, a femto cell, and the like. These small cells are characterized by small coverage and low transmission power and are adapted to provide data transmission service with high-rate.

In some implementations of the present disclosure, the AMF 101, the SMF 102, the AUSF 104, the UDM 105, the PCF 106, the DN107, and the UPF 108 are network elements (NEs) of a core network (also referred to as "core NE" for short).

The AMF NE can be configured to manage access of a terminal to a core network, for example, a location update of the terminal, network registration, access control, mobility management of the terminal, and attachment and detachment of the terminal. In a case of providing a service for a session of the terminal, the AMF NE can also provide storage resources of a control plane for the session, so as to store a session identifier, an SMF NE identifier associated with the session identifier, etc.

The SMF NE can be configured to select a user plane NE for a terminal, redirect the user plane NE for the terminal, allocate an internet protocol (IP) address to the terminal, establish a bearer (also referred to as "session") between the terminal and the UPF NE, modify and release a session, and control QoS.

The AUSF is configured to receive an identity authentication request for a terminal from the AMF, request a key from the UDM, and then forward the delivered key to the AMF for authentication processing.

The UDM includes functions such as generation and storage of user subscription data, authentication data management, etc., and supports interaction with an external third-party server. The PCF NE is configured to provide a policy for the AMF NE and the SMF NE, for example, a QoS policy or a slice selection policy.

The DN, for example, an IP multi-media service (IMS) network or the Internet, may provide a data service for a user. There may be a plurality of application servers in the DN to provide different application services, such as an operator service, an Internet access service, or a third-party service. The AS may implement a function of an application function (AF).

The UPF NE is mainly responsible for the transmission of user data. Other NEs can be referred to as "control plane function (CPF) NEs", The UPF NE is mainly responsible for identification, authentication, registration management, session management, mobility management, policy control, etc., to ensure the reliable and stable transmission of user data.

The UPF NE can be configured to forward and receive data of a terminal. For example, the UPF NE can receive service data from a data network, and transmit the service data to the terminal through an AN device. The UPF NE can further receive user data from the terminal through the AN device, and forward the user data to the data network. Transmission resources allocated and scheduled by the UPF NE to the terminal are managed and controlled by the SMF NE. A bearer between the terminal and the UPF NE can include: a user plane connection between the UPF NE and the AN device, and a channel established between the AN device and the terminal. The user plane connection is a QoS flow that can be established between the UPF NE and the AN device for data transmission.

The AF NE is configured to interact with the core NE to support the routing of application data.

In some implementations of the present disclosure, the UE can also be referred to as a terminal device, an access terminal, a subscriber unit, a subscriber station, a mobile station, a remote station, a remote terminal, a mobile device, a user terminal, a terminal, a wireless communication device, a user agent, a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), etc.

In implementations of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In implementations of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in implementations of the present disclosure, the terminal device may also be a wearable device. The wearable device may also be referred to as a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

It can be noted that the network architecture of the communication system illustrated in FIG. 1 does not constitute a limitation on the network architecture of the communication system in implementations of the present disclosure. In a specific implementation, the communication system can also include more or fewer NEs than those illustrated in FIG. 1, combining some NEs, etc. It can be understood that the RAN in FIG. 1 can also be represented by the AN.

For example, the communication system illustrated in FIG. 1 can also include a network exposure function (NEF) NE, etc., and the NEF NE can be connected to other NEs in the communication system illustrated in FIG. 1 through corresponding interfaces. The NEF NE is configured to provide network capability and event exposure and receive related external information.

It can be understood that in implementations of the present disclosure, a device with a communication function in a network/system is referred to as "communication device". For example, in the communication system illustrated in FIG. 1, the communication device can include an AN device with a communication capability (such as the RAN 103), a core NE (such as the PCF 106), and the UE 109.

It can be understood that the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It can be understood that "indication" referred to in implementations of the present disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of implementations of the present disclosure, the term "correspondence" may mean that there is a direct or indirect correspondence between the two, may mean that there is an association between the two, may mean a relationship of indicating and indicated or configuring and configured, etc.

In implementations of the present disclosure, the "pre-defined" can be implemented by pre-saving a corresponding code or table in a device (for example, including the terminal device and the network device) or in other manners that can be used for indicating related information, and the present disclosure is not limited in this regard. For example, the "pre-defined" may mean defined in a protocol.

To facilitate understanding of the technical solutions of implementations of the present disclosure, related technologies related to implementations of the present disclosure will be elaborated below.

Zero-power-consumption communication is a wireless communication technology suitable for short distance and low rate. A zero-power-consumption device mainly combines technologies such as radio frequency (RF) energy harvesting, back scattering, and low-power computing, etc., to enable a device node to operate without carrying a power supply.

The core of the RF energy harvesting is to convert RF energy into direct current (DC). The energy may be stored in a battery or a capacitor, or may be harvested and then directly used to power a logic circuit, a digital chip, or a sensor, so as to complete functions and applications such as modulating and transmitting back scattering signals, harvesting and processing sensor information, etc.

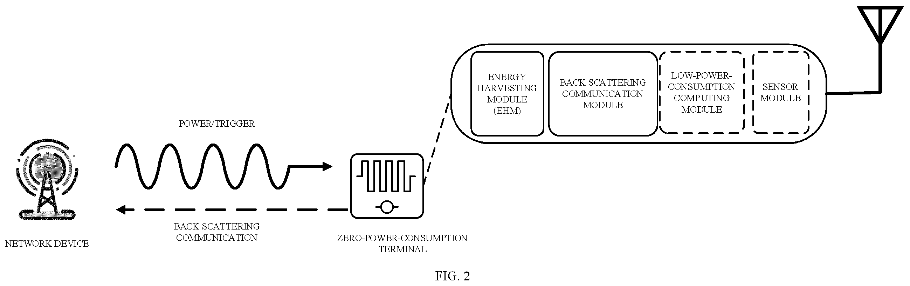

As illustrated in FIG. 2, a typical zero-power-consumption communication system (e.g., a radio frequency identification (RFID) system) includes a network device (e.g., a reader/writer of the RFID system) and a zero-power-consumption device (e.g., an electronic tag). The network device is configured to transmit a wireless power supply signal and a downlink communication signal to the zero-power-consumption device and receive a back scattering signal from the zero-power-consumption device. A basic zero-power-consumption device includes an energy harvesting module (EHM), a back scattering module, and a low-power-consumption computing module. In addition, the zero-power-consumption device can also have a memory or a sensor configured to store some basic information (such as object identification) or sensor data such as ambient temperature and ambient humidity.

For example, the EHM can harvest energy carried by radio waves in space (radio waves emitted by the network device are illustrated in FIG. 2), to drive the low-power-consumption computing module of the zero-power-consumption device and achieve back scattering. After obtaining power, the zero-power-consumption device can receive a control command from the network device and transmit data to the network device based on a control signaling by back scattering. The data transmitted can be data stored in the zero-power-consumption device itself (e.g., an identity identifier or pre-written information, such as the production date, brand, and manufacturer of the product). The zero-power-consumption device can also be loaded with various sensors, so as to report the data collected by various sensors based on the zero-power-consumption mechanism.

With the development of the NR system, it is considered that the zero-power-consumption device can be supported to access the network in the NR system. The main scenarios have the following characteristics: an extreme environment that is not suitable for an ordinary terminal to work, a terminal with very low-power consumption and cost, and a battery-free terminal.

The zero-power-consumption communication system can be used in scenarios such as a wireless industrial sensing network, a smart agriculture, a smart warehousing and logistic, and a smart home.

Based on energy sources and usages of the zero-power-consumption device, the zero-power-consumption device can be divided into the following types.

### 1. Passive zero-power-consumption device

The zero-power-consumption device (such as an electronic tag in the RFID system) does not require a built-in battery. When the zero-power-consumption device approaches a network device (such as a reader/writer in the RFID system), the zero-power-consumption device is located within a near field formed by radiation of an antenna of the network device. Therefore, the antenna of the zero-power-consumption device generates an induced current through electromagnetic induction, and the induced current drives the low-power-consumption chip circuit of the zero-power-consumption device, so as to achieve the demodulation of the forward link signal and the modulation of the reverse link (or reflection link) signal. For the back scattering link, the zero-power-consumption device transmits signals by back scattering.

It can be seen that the passive zero-power-consumption device does not require a built-in battery to drive either the forward link or the reverse link, and is a truly zero-power-consumption device.

The passive zero-power-consumption device does not require a battery, and the RF circuit and baseband circuit are very simple. For example, the passive zero-power-consumption device does not require devices such as a low-noise amplifier (LNA), a power amplifier (PA), a crystal oscillator, an analog-to-digital converter (ADC), etc. Therefore, the passive zero-power-consumption device has many advantages such as a small size, a light weight, a very low price, and a long service life.

This type of terminal device can further have the following characteristics: 1) no battery; 2) obtaining energy from the ambient environment (such as radio waves, solar energy, wind energy, or mechanical kinetic energy); 3) no universal subscriber identity module (USIM) card. This type of terminal device can further store a certain amount of energy through the ambient environment, but the energy is generally limited, so the supported functional logic is much less than that of a general mobile phone terminal.

### 2. Semi-passive zero-power-consumption device

The semi-passive zero-power-consumption device is not equipped with a conventional battery itself, but can use the RF EHM to harvest radio wave energy and store the harvested energy in an energy storage unit (such as a capacitor). After obtaining power, the energy storage unit can drive the low-power-consumption chip circuit of the zero-power-consumption device, so as to achieve the demodulation of the forward link signal and the modulation of the reverse link signal. For the back scattering link, the zero-power-consumption device transmits signals by back scattering.

It can be seen that the semi-passive zero-power-consumption device does not require a built-in battery to drive either the forward link or the reverse link. Although the energy stored in the capacitor is used in the work, the energy comes from the radio energy collected by the EHM. Therefore, it is also a truly zero-power-consumption device.

The semi-passive zero-power-consumption device inherits many advantages of the passive zero-power-consumption device, and thus has many advantages such as a small size, a light weight, a very low price, and a long service life.

### 3. Active zero-power-consumption device

The zero-power-consumption device used in some scenarios can also be an active zero-power-consumption device, which can have a built-in battery. The battery is used to drive the low-power-consumption chip circuit in the zero-power-consumption device, so as to achieve the demodulation of the forward link signal and the modulation of the reverse link signal. However, for the back scattering link, the zero-power-consumption device transmits signals by back scattering. Therefore, the zero-power-consumption of this type of device is mainly reflected in the fact that the signal transmission of the reverse link does not require the power of the terminal itself, but uses back scattering.

The active zero-power-consumption device has a built-in battery to power the RFID chip, so as to increase the reading and writing distance of tags and improve the reliability of communication. Therefore, the active zero-power-consumption device can be applied in some scenarios with relatively high requirements for communication distance and reading delay.

The zero-power-consumption device can be connected to a BS directly, which is referred to as "direct mode". Alternatively, the zero-power-consumption device can be connected to a BS through a relay device, which is referred to as "indirect mode".

To facilitate understanding of the technical solutions of implementations of the present disclosure, the technical solutions of the present disclosure will be described in detail below in connection with implementations. The following related art as an optional scheme can be arbitrarily combined with the technical solutions of implementations of the present disclosure, which shall all belong to the protection scope of implementations of the present disclosure. Implementations of the present disclosure include at least some of the following.

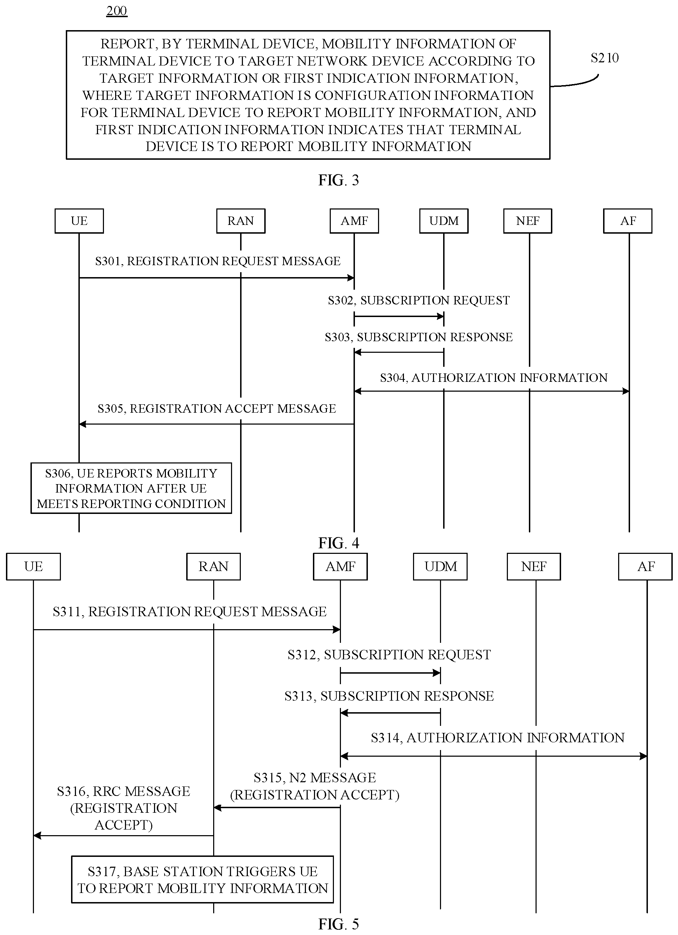

FIG. 3 is a schematic flow chart of a method 200 for wireless communication according to implementations of the present disclosure. As illustrated in FIG. 3, the method 200 includes at least some of the following.

S210, a terminal device reports mobility information of the terminal device to a target network device according to target information or first indication information. The target information is configuration information for the terminal device to report the mobility information. The first indication information indicates that the terminal device is to report the mobility information, or the first indication information is used for triggering the terminal device to report the mobility information.

In some implementations, the terminal device is an internet of things (IoT) device.

In some implementations, the terminal device is an ambient power-enabled IoT (AIoT) device, etc.

In some implementations, the terminal device can be an ambient power-enabled device, such as a zero-power-consumption device. The terminal device is either battery-less, or with limited energy storage capability, i.e., using a capacitor.

In some implementations, the terminal device is a device with low complexity, small size, or low-power consumption.

In some implementations, the target information can be obtained from a first network device.

In some implementations, the method 200 further includes the following. The terminal device receives the target information sent by the first network device.

In some implementations, the first network device can be a CN device, such as an AMF entity.

It can be understood that the present disclosure does not limit the specific signaling through which the first network device sends the target information to the terminal device, for example, sending through an NAS message.

In some implementations, the target information is sent by the first network device to the terminal device through a registration accept message.

For example, the terminal device can send a registration request message to the first network device. Further, the first network device can reply to the terminal device with the registration accept message, and the target information is carried in the registration accept message.

In some implementations, the registration request message contains second indication information. The second indication information indicates whether the terminal device is an ambient power-enabled IoT device, such as an ambient power internet of things (AMP IoT) device, indicates whether the terminal device supports being ambient power enabled, or indicates whether the terminal device supports energy harvesting. Optionally, the second indication information can be carried in capability information of the terminal device.

Optionally, the second indication information can have one bit, and the value of the one bit indicates whether the terminal device is an ambient power-enabled IoT device and whether the terminal device supports being ambient power enabled. For example, when the value of the one bit is 1, it indicates "support", and when the value of the one bit is 0, it indicates "not support".

In some implementations, the first indication information is obtained from an AN device.

In some implementations, the method 200 further includes the following. The terminal device receives the first indication information sent by the AN device.

In some implementations, the AN device can receive the target information sent by the first network device, and further trigger, according to the target information, the terminal device to report the mobility information.

Optionally, the first network device can send an N2 message to the AN device, where the N2 message carries the target information.

In some implementations, the AN device can periodically trigger, according to a period for reporting the mobility information of the terminal device, the terminal device to report the mobility information, that is, periodically send the first indication information to the terminal device.

In some implementations, the target network device may be an AN device, or may be a CN device, such as an AMF entity.

In some implementations, when the mobility information of the terminal device is reported to the AN device (i.e., the target network device is the AN device), the terminal device can send an access stratum (AS) message to the AN device, where the AS message contains the mobility information of the terminal device.

In other implementations, when the mobility information of the terminal device is reported to the CN device (i.e., the target network device is the CN device), the terminal device can send a non-access stratum (NAS) message to the CN device, where the NAS message contains the mobility information of the terminal device.

When the terminal device reports the mobility information to the AN device, the terminal device is not required to enter a connected state. In other words, the terminal device is not required to complete a connection establishment process with the AN device, thereby saving the power of the terminal device. When the terminal device reports the mobility information to the CN device, the terminal device is required to enter the connected state.

In implementations of the present disclosure, the mobility information is also referred to as "location update information".

Optionally, the mobility information of the terminal device can include, but is not limited to, at least one of: location information of the terminal device, such as current location information or current area information; movement distance information of the terminal device; movement route information of the terminal device; or timestamp information when the terminal device moves.

In some implementations, the target information is the configuration information for the terminal device to report mobility information.

For example, the target information is used for configuring a manner in which the terminal device reports the mobility information, such as a report recipient, a reporting period, a reporting condition, etc.

In some implementations, the target information includes at least one of: first information indicating whether the terminal device is required to report the mobility information of the terminal device, second information indicating a receiving device to which the terminal device is to report the mobility information, or third information indicating a reporting condition for the mobility information of the terminal device.

In some implementations, the first information can have one or more bits, and the values of the one or more bits indicate whether the terminal device is required to report the mobility information. For example, the first information has one bit, and when the value of the one bit is 1, it indicates "to report", otherwise, it indicates "not to report".

In some other implementations, when the target information has a specific indication bit, it indicates that the terminal device is to report the mobility information, and when the target information does not have the specific indication bit, it indicates that the terminal device is not to report the mobility information.

In other words, whether to report the mobility information may be indicated by explicit information, or may be indicated through whether specific information is carried.

In some implementations, the second information indicates the receiving device to which the terminal device is to report the mobility information, i.e., the report recipient.

For example, the second information indicates that the terminal device is to report the mobility information to the AN device, or is to report the mobility information to the CN device, for example, is to report the mobility information to the AMF entity.

In some implementations, the third information indicates, but is not limited to, at least one of: area information for the terminal device to report the mobility information, a movement distance threshold for the terminal device to report the mobility information, reference location information for determining a movement distance of the terminal device, or period information for the terminal device to report the mobility information.

In some implementations, the area information for the terminal device to report the mobility information can indicate one or more areas. When the terminal device is located in the one or more areas, the terminal device is to report the mobility information. In other words, the one or more areas are valid areas for the terminal device to report the mobility information.

In some implementations, the reference location information for determining the movement distance of the terminal device includes a reference terminal identity (ID) and/or an AP device ID. That is, a reference terminal or the AN device can be a reference device, and the movement distance of the terminal device can be based on the location of the reference device.

In some implementations, the reference terminal can be an anchor terminal (anchor UE).

In some implementations, the terminal device can determine, according to a change in a distance between the terminal device and the reference device, whether the terminal device moves and/or the movement distance.

Exemplarily, when the change in the distance between the terminal device and the reference device is less than a first threshold, it is determined that the terminal device does not move.

Exemplarily, when the movement distance of the terminal device exceeds the movement distance threshold, the mobility information of the terminal device is to be reported.

Optionally, the distance between the terminal device and the reference device can be determined through signal interaction between the terminal device and the reference device, and a specific manner for determining the distance is not limited in implementations of the present disclosure.

In some implementations, whether the terminal device is to report the mobility information can also be predefined. For example, a specific terminal device is predefined to report the mobility information.

In some implementations, the report recipient to which the terminal device is to report the mobility information can also be predefined. For example, the mobility information is predefined to be reported to the AN device, or the mobility information is predefined to be reported to the CN device. In this case, the first network device is not required to configure report recipient information for the terminal device.

In some implementations, the area information for the terminal device to report the mobility information can also be predefined. For example, the terminal device is predefined to report the mobility information in a specific area. In this case, the first network device is not required to configure the area information for the terminal device.

In some implementations, the movement distance threshold for the terminal device to report the mobility information can also be predefined. In this case, the first network device is not required to configure the movement distance threshold for the terminal device.

In some implementations, the reference location for determining the movement distance of the terminal device can also be predefined. For example, a location of a specific terminal or a location of a specific AN device is predefined as the reference location. In this case, the first network device is not required to configure the reference location information for the terminal device.

In some implementations, the reporting period for the terminal device to report the mobility information can also be predefined. In this case, the first network device is not required to configure the reporting period for the terminal device.

In some implementations of the present disclosure, the method 200 further includes the following. The first network device obtains the target information from a second network device.

In some implementations, the second network device may be a CN device, for example, the second network device is a UDM entity.

In some implementations, the second network device may be an application-related functional entity, such as an AF entity, or may be an application server.

Optionally, the UDM entity can carry the target information in subscription information for the terminal device.

Optionally, the AF entity can carry the target information in authorization information for the terminal device.

In some implementations, when the target information sent by the UDM entity is not received by the first network device, the target information sent by the AF entity can be used as the configuration information for the terminal device to report the mobility information. When the target information sent by the UDM entity and the target information sent by the AF entity are received by the first network device, a specific configuration for the terminal device to report the mobility information can be determined by comprehensively considering the target information sent by the UDM entity and the target information sent by the AF entity. For example, a reporting configuration indicated by the UDM entity is preferentially selected.

In some implementations, the operations at S210 can include the following. The terminal device can report the mobility information of the terminal device according to the area information for the terminal device to report the mobility information and/or the movement distance threshold for the terminal device to report the mobility information.

For example, when the terminal device is in a first area and the movement distance of the terminal device meets the movement distance threshold, the mobility information of the terminal device is reported, where the first area belongs to a valid area for reporting the mobility information configured by the target information.

In some implementations, the terminal device may determine, according to its hardware, such as a vibrator, whether the terminal device moves, or may determine whether the terminal device moves and the movement distance by using a positioning application, and a specific manner for determining whether the terminal device moves and the movement distance is not limited in the present disclosure.

In some implementations, the operation at S210 can include the following. The terminal device can report the mobility information of the terminal device according to the period information for the terminal device to report the mobility information.

That is, the terminal device can periodically report the mobility information, such that the network device can perform mobility management on the terminal device.

In some implementations, the first network device can receive, according to the reporting period for the terminal device to report the mobility information, the mobility information reported by the terminal device. For example, when the report recipient is the first network device, the first network device receives, according to the reporting period, the mobility information reported by the terminal device.

For example, the first network device receives, according to a first timer, the mobility information reported by the terminal device, where a duration of the first timer is determined according to the reporting period for the mobility information of the terminal device.

Optionally, when the first timer expires, if the mobility information reported by the terminal device is not received by the first network device, the first network device sends third indication information to the second network device, where the third indication information indicates to update the reporting period for the mobility information of the terminal device.

In the following, with reference to FIG. 4 and FIG. 5, for example, the first network device is an AMF entity, the second network device is a UDM entity or an AF entity, the AN device is an RAN, and the implementation of the method for wireless communication according to implementations of the present disclosure is explained from the perspective of device interaction.

In the example of FIG. 4, the terminal device can report the mobility information based on the configuration information for reporting the mobility information, i.e., the target information.

As illustrated in FIG. 4, at least some of the following can be included.

S301, a UE sends a registration request message to the AMF entity, where the registration request message contains second indication information, and the second indication information indicates whether the terminal device is an ambient power-enabled IoT device and whether the terminal device supports being ambient power enabled. For example, the value of 1 indicates "support", and the value of 0 indicates "not support".

Optionally, the second indication information can have one bit.

Optionally, the second indication information can be carried in a 5G mobility management (MM) capability parameter.

S302, the AMF entity requests subscription information for the UE from the UDM entity.

For example, the AMF entity sends a subscription request to the UDM entity.

Optionally, the subscription request contains a UE ID.

S303, the UDM entity replies a subscription response to the AMF entity.

In some implementations, the subscription response carries the subscription information for the UE, and configuration information for the UE to report the mobility information, i.e., the target information, is also carried in the subscription information for the UE.

For example, the subscription response can carry first information indicating that the UE is required to notify the network of its mobility information.

For another example, the subscription response can carry second information indicating an object to which the UE is to report the mobility information, such as a CN device or an AN device.

For yet another example, the subscription response can carry third information indicating a reporting condition for the UE to report mobility information, such as an applicable area, i.e., an area in which the UE is to report the mobility information, a reporting period, a movement distance threshold for reporting the mobility information, reference location information, etc.

Optionally, the subscription response can contain fourth indication information indicating that the UE is an ambient power-enabled IoT device.

Optionally, in some implementations, the method further includes the following. S304, the AMF entity obtains authorization information for the UE from the AF entity.

For example, the AMF entity obtains the authorization information for the UE from the AF entity through an NEF entity.

In some implementations, the authorization information for the UE carries the configuration information for the UE to report the mobility information, i.e., the target information.

Optionally, the authorization information for the UE contains the UE ID.

In some cases, if the UDM entity does not reply with a subscription response, the AMF entity takes the target information obtained from the AMF entity as the configuration information for the UE to report the mobility information.

In some implementations, if the AMF entity obtains the target information from both the UDM entity and the AF entity, reporting configuration configured by the AMF entity for the UE can be determined according to the target information obtained from the UDM entity and the target information obtained from the AF entity.

S305, the AMF entity sends a registration accept message to the UE.

In some implementations, the registration accept message contains the target information.

In some implementations, the AMF entity can start the first timer according to a reporting period for the mobility information of the UE, and receive, based on the first timer, the mobility information reported by the UE.

Optionally, if the mobility information reported by the UE is not received when the first timer expires, the UDM entity or the AF entity is notified to update or adjust the period for the UE to report the mobility information.

S306, the UE reports the mobility information according to the target information.

For example, if the UE is configured to report the mobility information to the RAN, the UE can send an AS message carrying the mobility information to the RAN. In this case, the UE is not required to enter the connected state, thereby saving the power of the UE.

For another example, if the UE is configured to report the mobility information to the CN device, the UE can send an NAS message carrying the mobility information to the CN device. In this case, the UE is required to enter the connected state.

In the example of FIG. 5, the terminal device can report the mobility information when being triggered by the RAN.

As illustrated in FIG. 5, at least some of the following can be included.

S311, the UE sends a registration request message to the AMF entity, where the registration request message contains second indication information, and the second indication information indicates whether the terminal device is an ambient power-enabled IoT device and whether the terminal device supports being ambient power enabled. For example, the value of 1 indicates "support", and the value of 0 indicates "not support".

Optionally, the second indication information can have one bit.

Optionally, the second indication information can be carried in a 5GMM capability parameter.

S312, the AMF entity requests the subscription information for the UE from the UDM entity.

For example, the AMF entity sends a subscription request to the UDM entity.

Optionally, the subscription request contains the UE ID.

S313, the UDM entity replies a subscription response to the AMF entity.

In some implementations, the subscription response carries the subscription information for the UE, and the configuration information for the UE to report the mobility information, i.e., the target information, is also carried in the subscription information for the UE.

For example, the subscription response can carry first information indicating that the UE is required to notify the network of its mobility information.

For another example, the subscription response can carry second information indicating the object to which the UE is to report the mobility information, such as a CN device or an AN device.

For yet another example, the subscription response can carry third information indicating the reporting condition for the UE to report mobility information, such as the reporting period.

Optionally, the subscription response can contain fourth indication information indicating that the UE is an ambient power-enabled IoT device.

Optionally, in some implementations, the method further includes the following. S314, the AMF entity obtains the authorization information for the UE from the AF entity.

For example, the AMF entity obtains the authorization information for the UE from the AF entity through the NEF entity.

In some implementations, the authorization information for the UE carries the configuration information for the UE to report the mobility information, i.e., the target information.

Optionally, the authorization information for the UE contains the UE ID.

In some cases, if the UDM entity does not reply with a subscription response, the AMF entity uses the target information obtained from the AMF entity.

In some implementations, if the AMF entity obtains target information from both the UDM entity and the AF entity, reporting configuration configured by the AMF entity for the UE can be determined according to the target information obtained from the UDM entity and the target information obtained from the AF entity.

S315, the AMF entity sends an N2 message to the RAN.

In some implementations, the N2 message contains the target information.

In some implementations, the N2 message contains indication information for indicating acceptance of the registration request from the UE.

In some implementations, the AMF entity can start the first timer according to the reporting period for the mobility information of the UE, and receive, based on the first timer, the mobility information reported by the UE.

Optionally, if the mobility information reported by the UE is not received when the first timer expires, the UDM or the AF is notified to update or adjust the period for the UE to report the mobility information.

S316, the RAN triggers, according to the target information, the UE to report the mobility information.

For example, the RAN periodically triggers, according to the reporting period, the UE to report the mobility information.

Optionally, the RAN can send RRC signaling to the UE, where the RRC signaling contains first indication information, and the first indication information indicates that the UE is to report the mobility information or location information.

In summary, the terminal device can report the mobility information based on the configuration information for reporting the mobility information, for example, reporting the mobility information when the movement distance exceeds a certain threshold time, reporting the mobility information according to a certain period, etc. Therefore, the terminal device can report its mobility information in time, such that the network device can realize the mobility management of the terminal device.

In other implementations, the terminal device can report the mobility information when being triggered by the AN device. For example, the AN device can periodically trigger the terminal device to report the mobility information, such that the network device can obtain the mobility information of the terminal device in time, thereby realizing the mobility management of the terminal device.

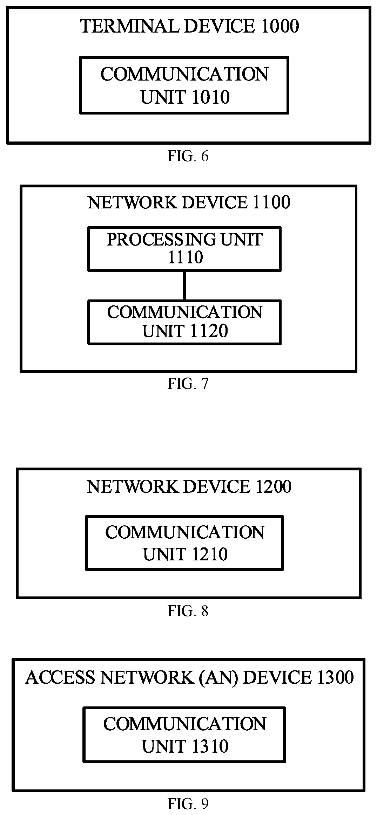

The method implementations of the present disclosure are described in detail above with reference to FIG. 3 to FIG. 5, and the apparatus implementations of the present disclosure will be described in detail below with reference to FIG. 6 to FIG. 7. It should be understood that the apparatus implementations and the method implementations correspond to each other, and for similar content, reference can be made to the method implementations.

FIG. 6 is a schematic block diagram of a terminal device 1000 according to implementations of the present disclosure. As illustrated in FIG. 6, the terminal device 1000 includes a communication unit 1010. The communication unit 1010 is configured to report mobility information of a terminal device to a target network device according to target information or first indication information, where the target information is configuration information for the terminal device to report the mobility information, and the first indication information indicates that the terminal device is to report the mobility information.

In some implementations, the target information includes at least one of: first information indicating whether the terminal device is required to report the mobility information of the terminal device, second information indicating a receiving device to which the terminal device is to report the mobility information, or third information indicating a reporting condition for the mobility information of the terminal device.

In some implementations, the second information indicates that the terminal device is to report the mobility information to an AN device, or is to report the mobility information to a CN device.

In some implementations, the third information indicates at least one of: area information for the terminal device to report the mobility information, a movement distance threshold for the terminal device to report the mobility information, reference location information for determining a movement distance of the terminal device, or period information for the terminal device to report the mobility information.

In some implementations, the reference location information for determining the movement distance of the terminal device includes a reference terminal ID and/or an AN device ID.

In some implementations, the communication unit 1010 is further configured to send an AS message to the AN device when the target network device is the AN device, where the AS message contains the mobility information of the terminal device.

In some implementations, the communication unit 1010 is further configured to send an NAS message to the CN device when the target network device is the CN device, where the NAS message contains the mobility information of the terminal device.

In some implementations, the communication unit 1010 is further configured to report the mobility information of the terminal device to the target network device when the terminal device is in a first area and the movement distance of the terminal device meets the movement distance threshold, where the first area belongs to an area for reporting the mobility information configured by the target information.

In some implementations, the target information is obtained from a first network device.

In some implementations, the first network device is an AMF entity.

In some implementations, the target information is sent by the first network device to the terminal device through a registration accept message.

In some implementations, the first indication information is obtained from the AN device.

In some implementations, the communication unit 1010 is further configured to send a registration request message to the first network device, where the registration request message contains second indication information, and the second indication information indicates that the terminal device is an ambient power-enabled IoT device.

Optionally, in some implementations, the communicating unit may be a communication interface or a transceiver, or an input/output interface of a communication chip or a system-on-chip (SOC).

It should be understood that, the terminal device 1000 according to implementations of the present disclosure may correspond to the terminal device in the method implementations of the present disclosure, and the foregoing and other operations and/or functions of various units in the terminal device 1000 are respectively intended for implementing corresponding operations of the terminal device in the method 200 illustrated in FIG. 3 to FIG. 5, which will not be described again herein for the sake of brevity.

FIG. 7 is a schematic block diagram of a network device according to implementations of the present disclosure. The network device 1100 of FIG. 7 includes a processing unit 1110 and a communication unit 1120. The processing unit 1110 is configured to obtain target information, where the target information is configuration information for a terminal device to report mobility information. The communication unit 1120 is configured to send the target information to the terminal device or an AN device.

In some implementations, the target information includes at least one of: first information indicating whether the terminal device is required to report the mobility information of the terminal device, second information indicating a receiving device to which the terminal device is to report the mobility information, or third information indicating a reporting condition for the mobility information of the terminal device.

In some implementations, the second information indicates that the terminal device is to report the mobility information to the AN device, or is to report the mobility information to a CN device.

In some implementations, the third information indicates at least one of: area information for the terminal device to report the mobility information, a movement distance threshold for the terminal device to report the mobility information, reference location information for determining a movement distance of the terminal device, or period information for the terminal device to report the mobility information.

In some implementations, the reference location information for determining the movement distance of the terminal device includes a reference terminal ID and/or an AN device ID.

In some implementations, the target information is obtained from a second network device.

In some implementations, the second network device includes a UDM entity and/or an AF entity.

In some implementations, the target information is obtained from the UDM entity, and the target information is carried in subscription information for the terminal device.

In some implementations, the target information is obtained from the AF entity, and the target information is carried in authorization information for the terminal device.

In some implementations, the communication unit 1120 is further configured to receive, according to a first timer, the mobility information reported by the terminal device, where a duration of the first timer is determined according to a period for reporting the mobility information of the terminal device.

In some implementations, the communication unit 1120 is further configured to send third indication information to the second network device when the mobility information reported by the terminal device is not received by the first network device after the first timer expires, where the third indication information indicates to update the period for reporting the mobility information of the terminal device.

In some implementations, the communication unit 1120 is further configured to receive the mobility information of the terminal device sent by the terminal device through an NAS message.

In some implementations, the communication unit 1120 is further configured to receive a registration request message sent by the terminal device, where the registration request message contains fourth indication information, and the fourth indication information indicates that the terminal device is an ambient power-enabled IoT device.

In some implementations, the target information is sent by the first network device to the terminal device through a registration accept message.

In some implementations, the network device is an AMF entity.

Optionally, in some implementations, the communicating unit may be a communication interface or a transceiver, or an input/output interface of a communication chip or an SOC. The processing unit may be one or more processors.

It should be understood that, the network device 1300 according to implementations of the present disclosure may correspond to the AN device in the method implementations of the present disclosure, and the foregoing and other operations and/or functions of various units in the network device 1300 are respectively intended for implementing corresponding operations of the AN device in the method 200 illustrated in FIG. 3 to FIG. 5, which will not be described again herein for the sake of brevity.

FIG. 8 is a schematic block diagram of a network device according to implementations of the present disclosure. The network device 1200 of FIG. 8 includes a communication unit 1210. The communication unit 1210 is configured to send target information to a first network device, where the target information is configuration information for a terminal device to report mobility information.

In some implementations, the target information includes at least one of: first information indicating whether the terminal device is required to report the mobility information of the terminal device, second information indicating a receiving device to which the terminal device is to report the mobility information, or third information indicating a reporting condition for the mobility information of the terminal device.

In some implementations, the second information indicates that the terminal device is to report the mobility information to an AN device, or is to report the mobility information to a CN device.

In some implementations, the third information indicates at least one of: area information for the terminal device to report the mobility information, a movement distance threshold for the terminal device to report the mobility information, reference location information for determining a movement distance of the terminal device, or period information for the terminal device to report the mobility information.

In some implementations, the reference location information for determining the movement distance of the terminal device includes a reference terminal ID and/or an AN device ID.

In some implementations, the network device includes a UDM entity and/or an AF entity.

In some implementations, the network device is the UDM entity, and the target information is carried in subscription information for the terminal device and then sent to the first network device.

In some implementations, the second network device is the AF entity, and the target information is carried in authorization information for the terminal device and then sent to the first network device.

In some implementations, the communication unit 1210 is further configured to receive third indication information sent by the first network device, where the third indication information indicates to update a period for reporting the mobility information of the terminal device.

In some implementations, the first network device is the AMF entity.

Optionally, in some implementations, the communicating unit may be a communication interface or a transceiver, or an input/output interface of a communication chip or an SOC.

It should be understood that, the network device 1200 according to implementations of the present disclosure may correspond to the second network device in the method implementations of the present disclosure, and the foregoing and other operations and/or functions of various units in the network device 1200 are respectively intended for implementing corresponding operations of the second network device in the method 200 illustrated in FIG. 3 to FIG. 5, which will not be described again herein for the sake of brevity.

FIG. 9 is a schematic block diagram of an AN device according to implementations of the present disclosure. The AN device 1300 of FIG. 9 includes a communication unit 1310. The communication unit 1310 is configured to receive target information sent by a first network device, where the target information is configuration information for a terminal device to report mobility information. The communication unit 1310 is configured to send first indication information to the terminal device according to the target information, where the first indication information indicates that the terminal device is to report the mobility information.

In some implementations, the target information includes at least one of: first information indicating whether the terminal device is required to report the mobility information of the terminal device, second information indicating a receiving device to which the terminal device is to report the mobility information, or third information indicating a reporting condition for the mobility information of the terminal device.

In some implementations, the second information indicates that the terminal device is to report the mobility information to the AN device, or is to report the mobility information to a CN device.

In some implementations, the third information indicates at least one of: area information for the terminal device to report the mobility information, a movement distance threshold for the terminal device to report the mobility information, reference location information for determining a movement distance of the terminal device, or period information for the terminal device to report the mobility information.

In some implementations, the reference location information for determining the movement distance of the terminal device includes a reference terminal identity ID and/or an AN device ID.

In some implementations, the AN device sends the first indication information to the terminal device according to the target information as follows. The AN device periodically sends the first indication information according to a period for reporting the mobility information of the terminal device.

In some implementations, the communication unit 1310 is further configured to receive the mobility information of the terminal device sent by the terminal device through an NAS message.

It should be understood that, the network device 1100 according to implementations of the present disclosure may correspond to the first network device in the method implementations of the present disclosure, and the foregoing and other operations and/or functions of various units in the network device 1100 are respectively intended for implementing corresponding operations of the first network device in the method 200 illustrated in FIG. 3 to FIG. 5, which will not be described again herein for the sake of brevity.

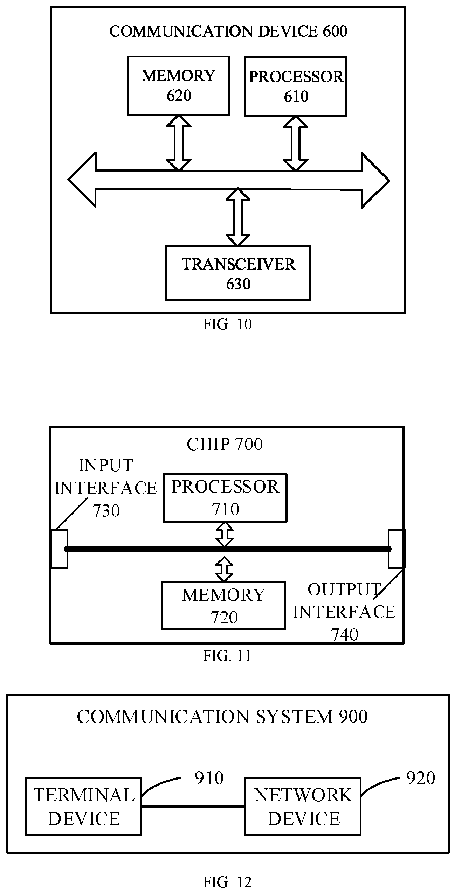

FIG. 10 is a schematic structural diagram of a communication device 600 provided in implementations of the present disclosure. The communication device 600 illustrated in FIG. 10 includes a processor 610. The processor 610 can invoke and execute a computer program stored in a memory, to implement the method in implementations of the present disclosure.

Optionally, as illustrated in FIG. 10, the communication device 600 can further include a memory 620, where the processor 610 can invoke and execute a computer program stored in the memory 620 to implement the method in implementations of the present disclosure.

The memory 620 can be a separate device independent of the processor 610, or can be integrated into the processor 610.

Optionally, as illustrated in FIG. 10, the communication device 600 can further include a transceiver 630. The processor 610 can control the transceiver 630 to communicate with other devices, and specifically, to send information or data to other devices or receive information or data sent by other devices.

The transceiver 630 can include a transmitter and a receiver. The transceiver 630 can further include an antenna, where one or more antennas can be provided.

Optionally, the communication device 600 can specifically be the first network device in implementations of the present disclosure, and the communication device 600 can implement corresponding operations implemented by the first network device in various methods in implementations of the present disclosure, which is not repeated herein for brevity.

Optionally, the communication device 600 can specifically be the second network device in implementations of the present disclosure, and the communication device 600 can implement corresponding operations implemented by the second network device in various methods in implementations of the present disclosure, which is not repeated herein for brevity.

Optionally, the communication device 600 can specifically be the AN device in implementations of the present disclosure, and the communication device 600 can implement corresponding operations implemented by the AN device in various methods in implementations of the present disclosure, which is not repeated herein for brevity.

Optionally, the communication device 600 can specifically be the mobile terminal/terminal device in implementations of the present disclosure, and the communication device 600 can implement corresponding operations implemented by the mobile terminal/terminal device in various methods in implementations of the present disclosure, which is not repeated herein for brevity.

FIG. 11 is a schematic structural diagram of a chip according to implementations of the present disclosure. The chip 700 illustrated in FIG. 11 includes a processor 710. The processor 710 can invoke and execute a computer program stored in a memory, so as to implement the method in implementations of the present disclosure.

Optionally, as illustrated in FIG. 11, the chip 700 can further include a memory 720. The processor 710 can invoke and execute a computer program stored in the memory 720, so as to implement the method in implementations of the present disclosure.

The memory 720 can be a separate device independent of the processor 710, or can be integrated into the processor 710.

Optionally, the chip 700 can further include an input interface 730. The processor 710 can control the input interface 730 to communicate with other devices or chips, and specifically, to obtain information or data sent by other devices or chips.

Optionally, the chip 700 can further include an output interface 740. The processor 710 can control the output interface 740 to communicate with other devices or chips, and specifically, to output information or data to other devices or chips.

Optionally, the chip is applicable to the first network device in implementations of the present disclosure, and the chip can implement corresponding operations implemented by the first network device in various methods in implementations of the present disclosure, which is not repeated herein for brevity.

Optionally, the chip is applicable to the second network device in implementations of the present disclosure, and the chip can implement corresponding operations implemented by the second network device in various methods in implementations of the present disclosure, which is not repeated herein for brevity.

Optionally, the chip is applicable to the AN device in implementations of the present disclosure, and the chip can implement corresponding operations implemented by the AN device in various methods in implementations of the present disclosure, which is not repeated herein for brevity.

Optionally, the chip is applicable to the mobile terminal/terminal device in implementations of the present disclosure, and the chip can implement corresponding operations implemented by the mobile terminal/terminal device in various methods in implementations of the present disclosure, which is not repeated herein for brevity.

It can be understood that the chip in implementations of the present disclosure can also be an SOC.

FIG. 12 is a schematic block diagram of a communication system 900 provided in implementations of the present disclosure. As illustrated in FIG. 19, the communication system 900 includes a terminal device 910 and a network device 920.

The terminal device 910 can be configured to implement corresponding functions implemented by the terminal device in the foregoing method, and the network device 920 can be configured to implement corresponding functions implemented by the network device in the foregoing method, which is not repeated herein for brevity.

It can be understood that, the processor in implementations of the present disclosure can be an integrated circuit chip with signal processing capabilities. During implementation, each step of the foregoing method implementations can be completed by an integrated logic circuit of hardware in the processor or an instruction in the form of software. The processor can be a general-purpose processor, a digital signal processor (DSP), an application-specific integrated circuit (ASIC), a field programmable gate array (FPGA), or other programmable logic devices, discrete gates or transistor logic devices, discrete hardware components. The methods, steps, and logic blocks disclosed in implementations of the present disclosure can be implemented or executed. The general-purpose processor can be a microprocessor, or the processor can be any conventional processor or the like. The steps of the method disclosed in implementations of the present disclosure can be directly implemented by a hardware decoding processor, or can be performed by hardware and software modules in the decoding processor. The software module can be located in a storage medium such as a random access memory (RAM), a flash memory, a read-only memory (ROM), a programmable ROM (PROM), or an electrically erasable programmable memory, registers, and the like. The storage medium is located in the memory. The processor reads the information in the memory, and completes the steps of the method described above with the hardware thereof.

It can be understood that, the memory in implementations of the present disclosure can be a volatile memory or a non-volatile memory, or can include both the volatile memory and the non-volatile memory. The non-volatile memory can be a ROM, a PROM, an erasable PROM (EPROM), an electrically EPROM (EEPROM), or flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). It should be noted that, the memory of the systems and methods described in the present disclosure is intended to include, but is not limited to, these and any other suitable types of memory.

It should be understood that, the memory above is intended for illustration rather than limitation. For example, the memory in implementations of the present disclosure can also be an SRAM, a DRAM, an SDRAM, a DDR SDRAM, an ESDRAM, an SLDRAM, a DR RAM, etc. In other words, the memory in implementations of the present disclosure is intended to include, but is not limited to, these and any other suitable types of memory.

Implementations of the present disclosure further provide a computer-readable storage medium. The computer-readable storage medium is configured to store a computer program.

Optionally, the computer-readable storage medium is applicable to the first network device in implementations of the present disclosure, and the computer program is operable with a computer to execute corresponding operations implemented by the first network device in various methods in implementations of the present disclosure, which is not repeated herein for brevity.

Optionally, the computer-readable storage medium is applicable to the second network device in implementations of the present disclosure, and the computer program is operable with a computer to execute corresponding operations implemented by the second network device in various methods in implementations of the present disclosure, which is not repeated herein for brevity.

Optionally, the computer-readable storage medium is applicable to the AN device in implementations of the present disclosure, and the computer program is operable with a computer to execute corresponding operations implemented by the AN device in various methods in implementations of the present disclosure, which is not repeated herein for brevity.

Optionally, the computer-readable storage medium is applicable to the mobile terminal/terminal device in implementations of the present disclosure, and the computer program is operable with a computer to execute corresponding operations implemented by the mobile terminal/terminal device in various methods in implementations of the present disclosure, which is not repeated herein for brevity.

Implementations of the present disclosure further provide a computer program product. The computer program product includes computer program instructions.

Optionally, the computer program product is applicable to the first network device in implementations of the present disclosure, and the computer program instructions are operable with a computer to execute corresponding operations implemented by the first network device in various methods in implementations of the present disclosure, which is not repeated herein for brevity.

Optionally, the computer program product is applicable to the second network device in implementations of the present disclosure, and the computer program instructions are operable with a computer to execute corresponding operations implemented by the second network device in various methods in implementations of the present disclosure, which is not repeated herein for brevity.

Optionally, the computer program product is applicable to the AN device in implementations of the present disclosure, and the computer program instructions are operable with a computer to execute corresponding operations implemented by the AN device in various methods in implementations of the present disclosure, which is not repeated herein for brevity.

Optionally, the computer program product is applicable to the mobile terminal/terminal device in implementations of the present disclosure, and the computer program instructions are operable with a computer to execute corresponding operations implemented by the mobile terminal/terminal device in various methods in implementations of the present disclosure, which is not repeated herein for brevity.

Implementations of the present disclosure further provide a computer program.

Optionally, the computer program is applicable to the first network device in implementations of the present disclosure. The computer program, when executed by a computer, is operable to implement corresponding operations implemented by the first network device in various methods in implementations of the present disclosure, which is not repeated herein for brevity.

Optionally, the computer program is applicable to the second network device in implementations of the present disclosure. The computer program, when executed by a computer, is operable to implement corresponding operations implemented by the second network device in various methods in implementations of the present disclosure, which is not repeated herein for brevity.

Optionally, the computer program is applicable to the AN device in implementations of the present disclosure. The computer program, when executed by a computer, is operable to implement corresponding operations implemented by the AN device in various methods in implementations of the present disclosure, which is not repeated herein for brevity.

Optionally, the computer program is applicable to the mobile terminal/terminal device in implementations of the present disclosure. The computer program, when executed by a computer, is operable to implement corresponding operations implemented by the mobile terminal/terminal device in various methods in implementations of the present disclosure, which is not repeated herein for brevity.

Those of ordinary skill in the art will appreciate that units and algorithmic operations of various examples described in connection with implementations of the present disclosure can be implemented by electronic hardware or by a combination of computer software and electronic hardware. Whether these functions are performed by means of hardware or software depends on the application and the design constraints of the associated technical solution. Those skilled in the art can use different methods with regard to each particular application to implement the described functionality, but such methods should not be regarded as lying beyond the scope of the present disclosure.

It is evident to those skilled in the art that, for the sake of convenience and brevity, in terms of the specific working processes of the foregoing systems, apparatuses, and units, reference can be made to the corresponding processes in the foregoing method implementations, which is not repeated herein.

It is appreciated that the systems, apparatuses, and methods disclosed in implementations of the present disclosure can also be implemented in various other manners. For example, the above apparatus implementations are merely illustrative, e.g., the division of units is only a division of logical functions, and other manners of division can be available in practice, e.g., multiple units or assemblies can be combined or can be integrated into another system, or some features can be ignored or skipped. In other respects, the coupling or direct coupling or communication connection as illustrated or discussed can be an indirect coupling or communication connection through some interface, device, or unit, and can be electrical, mechanical, or otherwise.

Separated units as illustrated can or cannot be physically separated. Components displayed as units can or cannot be physical units, and can reside at one location or can be distributed to multiple networked units. Some or all of the units can be selectively adopted according to practical needs to achieve desired objectives of the present disclosure.

In addition, various functional units described in various implementations of the present disclosure can be integrated into one processing unit or can be present as a number of physically separated units, and two or more units can be integrated into one.

If the functions are implemented as software functional units and sold or used as standalone products, they can be stored in a computer-readable storage medium. Based on such an understanding, the essential technical solution, or the portion that contributes to the prior art, or part of the technical solution of the present disclosure can be embodied as software products. The computer software products can be stored in a storage medium and can include multiple instructions that, when executed, can cause a computer device, e.g., a personal computer, a server, a network device, etc., to execute some or all operations of the methods described in various implementations of the present disclosure. The above storage medium can include various kinds of media that can store program codes, such as a universal serial bus (USB) flash disk, a mobile hard drive, an ROM, an RAM, a magnetic disk, or an optical disk.

The foregoing elaborations are merely implementations of the present disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for wireless communication, comprising:
reporting, by a terminal device, mobility information of the terminal device to a target network device according to target information or first indication information, wherein the target information is configuration information for the terminal device to report the mobility information, and the first indication information indicates that the terminal device is to report the mobility information.

2. The method of claim 1, wherein the target information comprises at least one of:
first information indicating whether the terminal device is required to report the mobility information of the terminal device;
second information indicating a receiving device to which the terminal device is to report the mobility information; or
third information indicating a reporting condition for the mobility information of the terminal device.

3. The method of claim 2, wherein the second information indicates that the terminal device is to report the mobility information to an access network (AN) device, or is to report the mobility information to a core network (CN) device.

4. The method of claim 2 or 3, wherein the third information indicates at least one of:
area information for the terminal device to report the mobility information;
a movement distance threshold for the terminal device to report the mobility information;
reference location information for determining a movement distance of the terminal device; or
period information for the terminal device to report the mobility information.

5. The method of claim 4, wherein the reference location information for determining the movement distance of the terminal device comprises a reference terminal identity (ID) and/or an AN device ID.

6. The method of any one of claims 1 to 5, wherein reporting, by the terminal device, the mobility information of the terminal device to the target network device according to the target information comprises:
sending, by the terminal device, an access stratum (AS) message to an AN device in response to the target network device being the AN device, wherein the AS message contains the mobility information of the terminal device.

7. The method of claim 6, wherein reporting, by the terminal device, the mobility information of the terminal device to the target network device according to the target information comprises:
sending, by the terminal device, a non-access stratum (NAS) message to a CN device in response to the target network device being the CN device, wherein the NAS message contains the mobility information of the terminal device.

8. The method of any one of claims 1 to 7, wherein reporting, by the terminal device, the mobility information of the terminal device to the target network device according to the target information comprises:
reporting the mobility information of the terminal device to the target network device in response to the terminal device being in a first area and a movement distance of the terminal device meeting a movement distance threshold, wherein the first area belongs to an area for reporting the mobility information configured by the target information.

9. The method of any one of claims 1 to 8, wherein the target information is obtained from a first network device.

10. The method of claim 9, wherein the first network device is an access and mobility management function (AMF) entity.

11. The method of claim 9 or 10, wherein the target information is sent by the first network device to the terminal device through a registration accept message.

12. The method of any one of claims 1 to 11, wherein the first indication information is obtained from an AN device.

13. The method of any one of claims 1 to 12, further comprising:
sending, by the terminal device, a registration request message to a first network device, wherein the registration request message contains second indication information, and the second indication information indicates that the terminal device is an ambient power-enabled internet of things (IoT) device.

14. A method for wireless communication, comprising:
obtaining, by a first network device, target information, wherein the target information is configuration information for a terminal device to report mobility information; and
sending, by the first network device, the target information to the terminal device or an access network (AN) device.

15. The method of claim 14, wherein the target information comprises at least one of:
first information indicating whether the terminal device is required to report the mobility information of the terminal device;
second information indicating a receiving device to which the terminal device is to report the mobility information; or
third information indicating a reporting condition for the mobility information of the terminal device.

16. The method of claim 15, wherein the second information indicates that the terminal device is to report the mobility information to the AN device, or is to report the mobility information to a core network (CN) device.

17. The method of claim 15 or 16, wherein the third information indicates at least one of:
area information for the terminal device to report the mobility information;
a movement distance threshold for the terminal device to report the mobility information;
reference location information for determining a movement distance of the terminal device; or
period information for the terminal device to report the mobility information.

18. The method of claim 17, wherein the reference location information for determining the movement distance of the terminal device comprises a reference terminal identity (ID) and/or an AN device ID.

19. The method of any one of claims 14 to 18, wherein the target information is obtained from a second network device.

20. The method of claim 19, wherein the second network device comprises a unified data management (UDM) entity and/or an application function (AF) entity.

21. The method of claim 20, wherein the target information is obtained from the UDM entity, and the target information is carried in subscription information for the terminal device.

22. The method of claim 20, wherein the target information is obtained from the AF entity, and the target information is carried in authorization information for the terminal device.

23. The method of any one of claims 14 to 22, further comprising:
receiving, by first network device according to a first timer, the mobility information reported by the terminal device, wherein
a duration of the first timer is determined according to a period for reporting the mobility information of the terminal device.

24. The method of claim 23, further comprising:
sending, by the first network device, third indication information to a second network device in response to the mobility information reported by the terminal device being not received by the first network device after the first timer expires, wherein the third indication information indicates to update the period for reporting the mobility information of the terminal device.

25. The method of any one of claims 14 to 24, further comprising:
receiving, by the first network device, the mobility information of the terminal device sent by the terminal device through a non-access stratum (NAS) message.

26. The method of any one of claims 14 to 25, further comprising:
receiving, by the first network device, a registration request message sent by the terminal device, wherein the registration request message contains fourth indication information, and the fourth indication information indicates that the terminal device is an ambient power-enabled internet of things (IoT) device.

27. The method of any one of claims 14 to 26, wherein the target information is sent by the first network device to the terminal device through a registration accept message.

28. The method of any one of claims 14 to 27, wherein the first network device is an access and mobility management function (AMF) entity.

29. A method for wireless communication, comprising:
sending, by a second network device, target information to a first network device, wherein the target information is configuration information for a terminal device to report mobility information.

30. The method of claim 29, wherein the target information comprises at least one of:
first information indicating whether the terminal device is required to report the mobility information of the terminal device;
second information indicating a receiving device to which the terminal device is to report the mobility information; or
third information indicating a reporting condition for the mobility information of the terminal device.

31. The method of claim 30, wherein the second information indicates that the terminal device is to report the mobility information to an access network (AN) device, or is to report the mobility information to a core network (CN) device.

32. The method of claim 30 or 31, wherein the third information indicates at least one of:
area information for the terminal device to report the mobility information;
a movement distance threshold for the terminal device to report the mobility information;
reference location information for determining a movement distance of the terminal device; or
period information for the terminal device to report the mobility information.

33. The method of claim 32, wherein the reference location information for determining the movement distance of the terminal device comprises a reference terminal identity (ID) and/or an AN device ID.

34. The method of any one of claims 29 to 33, wherein the second network device comprises a unified data management (UDM) entity and/or an application function (AF) entity.

35. The method of claim 34, wherein the second network device is the UDM entity, and the target information is carried in subscription information for the terminal device and then sent to the first network device.

36. The method of claim 34, wherein the second network device is the AF entity, and the target information is carried in authorization information for the terminal device and then sent to the first network device.

37. The method of any one of claims 29 to 36, further comprising:
receiving, by the second network device, third indication information sent by the first network device, wherein the third indication information indicates to update a period for reporting the mobility information of the terminal device.

38. The method of any one of claims 29 to 37, wherein the first network device is an access and mobility management function (AMF) entity.

39. A method for wireless communication, comprising:
receiving, by an access network (AN) device, target information sent by a first network device, wherein the target information is configuration information for a terminal device to report mobility information; and
sending, by the AN device, first indication information to the terminal device according to the target information, wherein the first indication information indicates that the terminal device is to report the mobility information.

40. The method of claim 39, wherein the target information comprises at least one of:
first information indicating whether the terminal device is required to report the mobility information of the terminal device;
second information indicating a receiving device to which the terminal device is to report the mobility information; or
third information indicating a reporting condition for the mobility information of the terminal device.

41. The method of claim 40, wherein the second information indicates that the terminal device is to report the mobility information to the AN device, or is to report the mobility information to a core network (CN) device.

42. The method of claim 40 or 41, wherein the third information indicates at least one of:
area information for the terminal device to report the mobility information;
a movement distance threshold for the terminal device to report the mobility information;
reference location information for determining a movement distance of the terminal device; or
period information for the terminal device to report the mobility information.

43. The method of claim 42, wherein the reference location information for determining the movement distance of the terminal device comprises a reference terminal identity (ID) and/or an AN device ID.

44. The method of any one of claims 39 to 43, wherein sending, by the AN device, the first indication information to the terminal device according to the target information comprises:
sending periodically, by the AN device, the first indication information according to a period for reporting the mobility information of the terminal device.

45. The method of any one of claims 39 to 44, further comprising:
receiving, by the AN device, the mobility information of the terminal device sent by the terminal device through an access stratum (NAS) message.

46. A terminal device, comprising:
a communication unit configured to report mobility information of a terminal device to a target network device according to target information or first indication information, wherein the target information is configuration information for the terminal device to report the mobility information, and the first indication information indicates that the terminal device is to report the mobility information.

47. A network device, comprising:
a processing unit configured to obtain target information, wherein the target information is configuration information for a terminal device to report mobility information; and
a communication unit configured to send the target information to the terminal device or an access network (AN) device.

48. A network device, comprising:
a communication unit configured to send target information to a first network device, wherein the target information is configuration information for a terminal device to report mobility information.

49. An access network (AN) device, comprising:
a communication unit configured to:
receive target information sent by a first network device, wherein the target information is configuration information for a terminal device to report mobility information; and
send first indication information to the terminal device according to the target information, wherein the first indication information indicates that the terminal device is to report the mobility information.

50. A terminal device, comprising:
a memory configured to store a computer program; and
a processor configured to invoke and execute the computer program stored in the memory, to perform the method of any of claims 1 to 13.

51. A network device, comprising:
a memory configured to store a computer program; and
a processor configured to invoke and execute the computer program stored in the memory, to perform the method of any of claims 14 to 28, the method of any of claims 29 to 38, or the method of any of claims 39 to 45.

52. A chip, comprising:
a processor configured to invoke and execute a computer program stored in a memory, to cause a device equipped with the chip to perform the method of any of claims 1 to 13, the method of any of claims 14 to 28, the method of any of claims 29 to 38, or the method of any of claims 39 to 45.

53. A computer-readable storage medium configured to store a computer program that is operable with a computer to perform the method of any of claims 1 to 13, the method of any of claims 14 to 28, the method of any of claims 29 to 38, or the method of any of claims 39 to 45.

54. A computer program product comprising computer program instructions that are operable with a computer to perform the method of any of claims 1 to 13, the method of any of claims 14 to 28, the method of any of claims 29 to 38, or the method of any of claims 39 to 45.

55. A computer program being operable with a computer to perform the method of any of claims 1 to 13, the method of any of claims 14 to 28, the method of any of claims 29 to 38, or the method of any of claims 39 to 45.
